# EUROPEAN PATENT SPECIFICATION

(11) **EP 2 466 591 B1**
(45) Date of publication and mention of the grant of the patent: **22.03.2017**
(21) Application number: 10195756.1
(22) Date of filing: 17.12.2010
(51) Int. Cl.: G21C 19/32, B25J 15/00, B66C 1/66, G21C 19/105

(54) **Remotely controlled handling device for operating in storage cells**
Ferngesteuerte Handhabungsvorrichtung zum Betreiben von Speicherzellen
Dispositif de manipulation télécommandé permettant un fonctionnement dans les cellules de stockage

(43) Date of publication of application: 20.06.2012
(73) Proprietor: The European Atomic Energy Community (EURATOM), represented by the European Commission, 1049 Brussels (BE)
(72) Inventor: Cornella Medrano, Jordi, 21017 Ispra (IT); Sequeira, Vitor, 4430-410 Vila Nova de Gaia (PT); Ruiz Morales, Emilio, 21020 Taino (IT); Bergonzi, Claudio, 21021 Angera (VA) (IT)
(74) Representative: Office Freylinger

(56) References cited:
- FR-A1- 2 682 803
- JP-A- 2005 300 266
- JP-U- H02 141 855

## Description

### FIELD OF THE INVENTION

The present invention generally relates to remotely actuated manipulators used in storage facilities. More particularly, the present invention relates to a compact manipulator that can be deployed through existing storage facilities.

### BACKGROUND OF THE INVENTION

Nowadays, many types of handling equipment exist, which are used in hostile or dangerous surroundings, *inter alia* in the nuclear field, to carry out various remotely controlled handling operations.

The need for such handling equipment is particularly acute when decommissioning and dismantling nuclear facilities as well as for manipulating spent nuclear fuels (SNFs) in order to avoid, or at least reduce, human exposure to radioactivity.

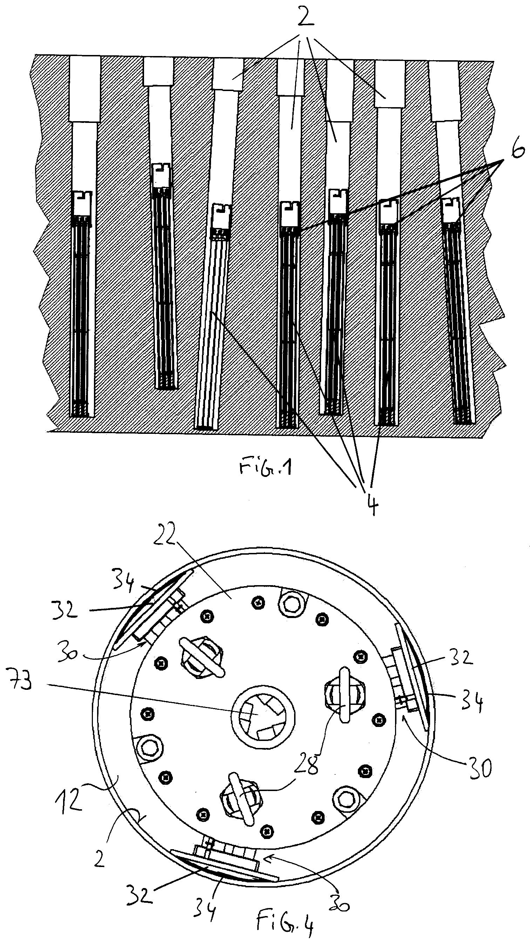

In this connection, the present inventors have been involved in the past years in the dismantling and clean-up of a former military naval facilities with Spent Nuclear Fuels (SNFs) stored in so-called dry storage units (DSUs). As it is known to those skilled in the art, DSUs are deep tanks filled with concrete and with a large number of generally vertical cells inside (see Fig.1), each cell containing a canister with several SNFs. On average, the diameter and depth of the cells are 300 mm and 5 m, respectively. The position level of the canister inside the cell differs from one cell to another with values ranging from 1 to 2.5 m (distance between the ground, i.e. top of the cell, to the top of the canister). The canisters can also have different shapes and contain different numbers of SNFs inside. Besides of this diversity of shapes and sizes, there are also several geometrical uncertainties about the relative position of the canister inside the cell, in particular, the cells can be inclined some degrees with respect to the vertical axis.

Conventional remote handling systems are based on robotic arms or telescopic masts. The type of handling equipment used is generally selected in relation to the precision of the work to be carried out and the size of the loads to be shifted, one or other of these values being given priority.

A conventional storage tank manipulator is e.g. described in US 5,762,467.

A handling equipment having both the load capacity of a gantry crane with mast and the precision of a slave-manipulator is described in FR 2 482 508. The handling equipment comprises a telescopic supporting assembly carrying a motorized orientation support for at least one articulated slave arm. The orientation support includes a body pivotally mounted around a vertical axis at the end of the supporting assembly and at least one supporting member pivotally mounted around a horizontal axis on the body. A fixing device is provided between each slave arm and each supporting member to allow remote locking and unlocking of the slave arms. The supporting assembly bears at least one television camera for observing the free end of each slave arm.

Although adequate for most SNF warehouses, the use of remote handling systems based on telescopic masts with end effectors is not always convenient. This may particularly be the case in old facilities where poor maintenance and degradation could strongly affect the performance of such systems. Still taking the example of DSUs, there are several geometrical uncertainties, which could represent an important pitfall for this type of remote operated systems. Namely, it has been observed that the cell and the canister can be inclined some degrees with respect to the vertical axis (see Fig.1), which can represent an important pitfall, especially for systems based on rigid links due to the diameter and depth of the cell, the end-effector being under some circumstances unable to reach all the working area. The range of tasks to be performed is also broader than in conventional SNF warehouses (for instance, some tasks imply cleaning, picking up debris...) and the system has to be able to adapt easily to the requirements of each task.

Furthermore, the size of the handling system, its weight capacity and positioning precision are of relevance:
- The remote handling system has to carry out operations inside a deep cell. When movements are driven through a long mast or robot arm, carrying out fine motions is more difficult due to inertia and friction effects.
- The system has to operate inside small and deep cells and to take important weights. This means that the mechanical design has to be chosen carefully, since the system has to resist the weight and the inertial moments produced due to the long arm, and at the same time it has to be thin enough to accomodate inside the cell.

JP2005300266 describes a self-propelled inspection and repair robot used in nuclear power plants comprising a body with integrated laser welding tool, a camera and extendable fixing means with adsorption pads.

### OBJECT OF THE INVENTION

The object of the present invention is to provide an improved type of remote handling device that can be easily deployed and allows carrying out precision tasks.

This object is achieved by a handling device as claimed in claim 1.

### SUMMARY OF THE INVENTION

According to the present invention, a remotely controllable handling device for handling material in a cell comprises a base module having a frame supporting:
- connector means for support of the handling device by a support structure outside the cell through a flexible link member (e.g. a rope, chain and/or cable),
- extendable fixing means able to engage the walls of a cell for blocking said handling device in place, and
- a tool support.

At least one tool unit is mounted to the tool support to be able to carry out a task in the cell. The device further comprises a vision member allowing remote viewing of the working area.

The present handling device is designed as a kind of capsule that allows an operator to carry out remote inspection and manipulation tasks of material stored inside cells, in particular inside DSU cells for SNFs. The term "cell" is to be construed as meaning any kind of hole, recess, compartment, niche, alcove or like cavity, whether in a solid mass or in less bulky rigid body.

It shall be appreciated that unlike conventional remote handling systems that are based on a rigid kinematic chain (i.e. masts or robot arms) anchored outside the cell and ending with a tool, the present device is designed to be supported by a structure outside the cell to which it is linked via a flexible link member such as a rope or chain (or such assemblies) connected to the connector means.

However, to allow precise work in the cell, the handling device can be first positioned, through the external structure with flexible link member, and then blocked in a desired position in the cell thanks to the extendable fixing means that allow pushing against the walls of the cell to immobilise the device therein. Such extendable fixing means may take the form of arms of adjustable length (e.g. linear actuators). In one embodiment, a set of three expandable arms are arranged in a transversal plane with an angular spacing of 120°. As it will be understood, the extendable fixing means may also be used to adjust the position of the device relative to the cell walls, namely for centring.

The handling device according to the present invention thus allows for an easy deployment, improved flexibility and capability to accommodate to unexpected conditions, as compared to known solutions. This makes the present handling device especially suitable for working in areas with poor maintenance and general degradation, since in this case flexibility is an essential requirement in order to accomplish the tasks with a good performance despite of the uncertainties of the environment.

The base module provides an interface with the deployment equipment (i.e. outer cell support structure) and a stable platform for the tools that operate inside the cell.

A variety of tool units may be fixed, preferably one at a time, to the tool support of the base module, depending on the tasks to be carried out inside the cell. The tool support is advantageously configured as an industrial tool changer with interface connections for various services such as power, pneumatic air, electronic connections, etc., hence allowing operation of a variety of tool units.

Each tool is advantageously provided with the appropriate degrees of freedom for carrying out the desired operation (depending on the task), typically at least three. Since the movements inside the cell are small but require a good accuracy, having stable base module is much more efficient than moving all the system as would be the case for conventional systems.

The configuration of the present handling device allows the deployment of the required tool and the alignment with the cell due to the flexibility of the ropes or chains. Once the tool is placed at the desired height in the cell, the extendable fixing means of the base module are activated in order to block, and preferably centre, the device and avoid undesired movements as well as balance any perturbation force.

Besides of increasing flexibility, the use of a rope or chain (or the like) instead of rigid links allows holding the required weight without increasing the sizes of the components since torques at the base of such rigid links are not produced. Possible lateral movements due to the suspension by a flexible link member are prevented by the blocking exerted by the expandable fixing means.

The expandable fixing means may advantageously comprise force and/or position sensors allowing a closed-loop control for an increased operational accuracy.

Control of the handling unit, for its blocking/positioning and actuation of the tool units is easily performed by an operator at a remote control unit with the appropriate displays and interfaces. The remote control unit may be connected to the handling device via a cable assembly carrying power cables, control signals and the desired services such as pneumatic air, vacuum hose...

The present invention further concerns a handling system comprising the present remotely controllable handling device as defined herein, and a support structure for carrying and moving the handling device, wherein said handling device is connected to said support structure by means of a flexible link member, preferably a rope or a chain. For operation in a DSU or other sites, the support structure is thus configured to move the handling device from one working cell to the other and lower and raise the handling unit suspended at the extremity of the flexible link member. In operation, the handling device is thus supported inside the cell by the flexible link member, the latter being anchored outside the cell to the support structure.

### BRIEF DESCRIPTION OF THE DRAWINGS

The present invention will now be described, by way of example, with reference to the accompanying drawings, in which:
- FIG. 1:: is a principle section view through a conventional dry storage unit with cells containing canisters filled with SNFs;
- FIG. 2:: is a perspective view of a preferred embodiment of the present handling device, equipped with a gripper tool unit;
- FIG. 3:: is an enlarged view of the gripper tool unit shown in Fig.2;
- FIG. 4:: is a top view of the device of Fig.2 inserted in a DSU cell;
- FIG. 5:: is a partially exploded perspective view of the base module of the device of Fig.2;
- FIG. 6:: is a perspective view of the base module equipped with a cutting tool unit;
- FIG. 7:: is a perspective view illustrating a conventional gantry crane assembly supporting the present handling device by means of its hoisting device and with an auxiliary platform over the DSU where the device will be inserted; and
- FIG. 8:: is a section view through a DSU showing the present handling device in a cell.

### DETAILED DESCRIPTION OF A PREFERRED EMBODIMENT

Fig.1 illustrates a conventional configuration of existing DSUs and more specifically how some cells 2 may unexpectedly be inclined relative to the vertical. Canisters 4 in the cell may have different dimensions and contain different quantities of SNFs, which are indicated 6.

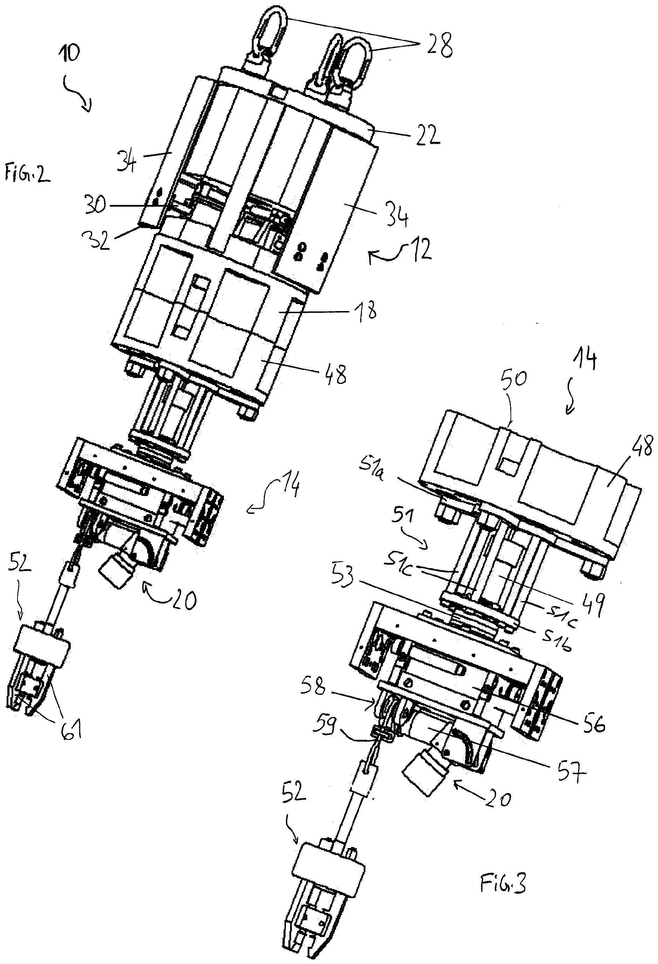

The present handling device is a remotely controlled device having an increased flexibility and that is able to accommodate to unexpected conditions. A preferred embodiment of the present handling device 10 is illustrated in Fig.2. It comprises a base module 12 and a tool unit 14, which here features a gripping tool.

The handling device 10 is designed as a self-contained capsule, where the base module 12 forms an interface platform between an out-of-cell support structure (such as e.g. a crane) and the tool to be used inside the cell and mounted to the base module 12.

Accordingly, the base module 12 comprises a frame to which the following components are mounted:
- at least one connector for connecting the base module 12 to the external support structure, preferably by means of a flexible link member such as e.g. a rope, cable or chain;
- extendable fixing means configured so as to be able to engage the walls of a cell 2 for locking the device 10 in place
- a tool support 18.

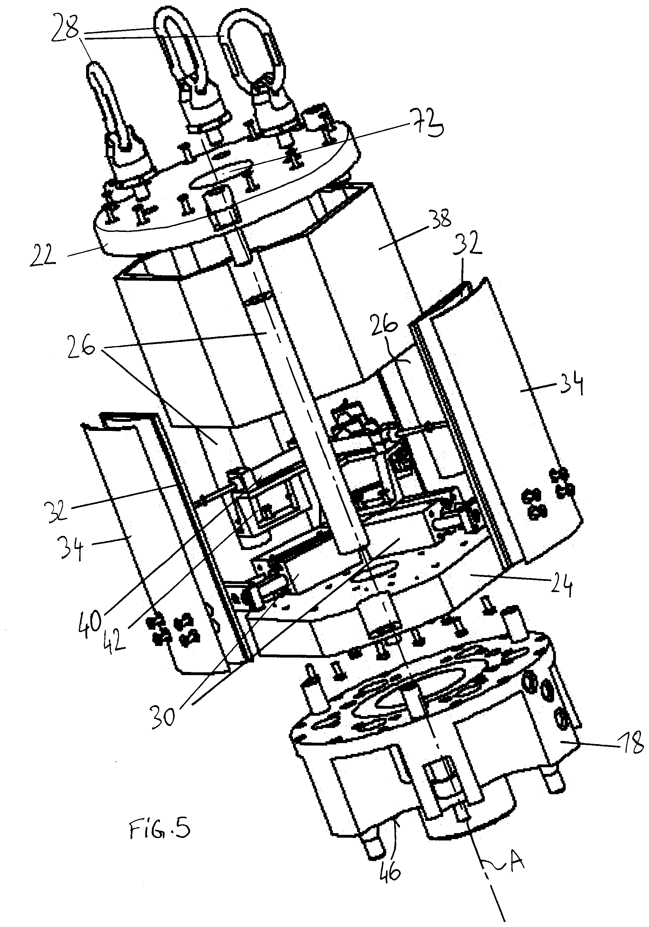

The tool unit 14 with gripper is mounted to the tool support 18. A vision member 20 comprising at least one video acquisition device and preferably a lighting device is fixed on the tool unit 14. The video acquisition device may be a video camera or a like device allowing remote visioning of the working area. The lighting device may comprise lamps or LEDs. Vision member 20 here comprises a video camera with an integrated ring of LEDs.The base module 12 will now be described in more detail with respect to Fig.5. The frame of the base module comprises top and bottom plates 22, resp. 24, that are fixed -e.g. bolted- at respective extremities of three mounting rods 26.

Three lifting rings 28 are secured to the top plate 22 to serve as connectors. This allows an easy and flexible deployment of the handling device 10 that may thus simply be attached by means of a flexible link member such as rope or chain to a support structure, and lowered inside the cell to be explored and processed.

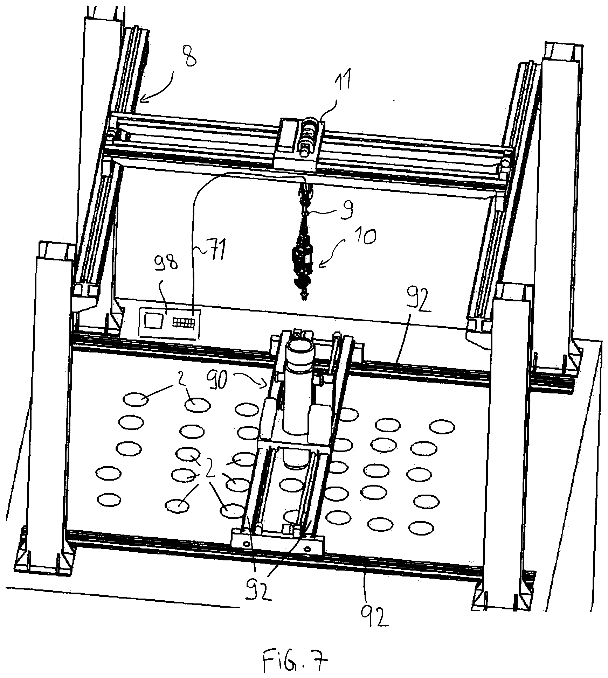

Fig.7 shows how the present handling device 10 is supported by a support structure comprising a conventional gantry crane 8 mounted over a standard DSU facility. The handling device 10 is attached to the crane 9. The supportive structure of the gantry crane thus allows movement over the area of the DSU, while the hoist 11 allows lowering the crane 9 and thus the handling device10 down into the desired cells.

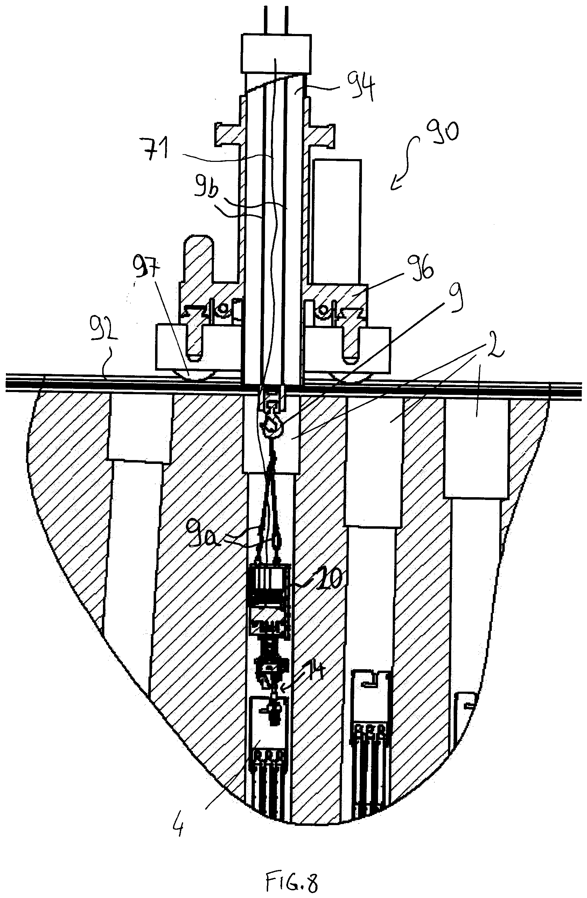

Reference sign 90 generally indicates an optional, external auxiliary platform (Figs.7 and 8), which is a device movable on tracks 92 in the same way as the gantry crane 8, but directly on the top surface of the DSU; it comprises auxiliary equipment for assisting in the retrieval of SNFs. A substantially vertical cylinder 94 having an internal diameter similar to the diameter of the cells is positioned concentrically with respect to the latter in order to provide shielding against radiation when the SNFs are out of the cell. This cylinder 94 is supported by a rolling basis 96, e.g. equipped with two pairs of wheels 97 for its displacement on the transversal tracks. The height of the guide cylinder should be at least equal to the height of the SNFs to provide appropriate shielding (and is thus adapted to the specificities of site of use). Other auxiliary equipments may comprise ventilation systems and temporary containers for storing the material coming from the inide of the DSU cell, as it is known in the art.

Back to Fig.5, the tool support 18 is affixed to the base plate 24 and advantageously configured as an industrial tool changer allowing removable connection of various types of tool units, as will be explained hereinbelow.

In the present embodiment, the extendable fixing means comprise a set of three arms 30 that have an adjustable length and can be extended in a plane substantially transversal to the longitudinal axis A (essentially passing through the centre of the plates 22 and 24 in this embodiment) of the device 10 in order to engage the cell walls. The arms 30 take the form of linear actuators arranged at 120° in a plane transversal to the longitudinal axis of the device. The arms/actuators 30 are actually fixed to the bottom plate 24. The arms 30 comprise at their outer ends blocking pads 32 extending parallel to the longitudinal axis. In case of a circular cell, the pads 32 are advantageously curved with a radius similar to the internal radius of the cell in which it is to be used in order to increase the contact region. The pads are covered with a rubber layer 34 in order to increase the friction and the grip to the walls of a cylindrical cell.

For an improved control of the fixing means, the latter are advantageously configured to allow force and position feedback. In view of the characteristics of force and dimensions, pneumatic linear actuators may be employed as expandable arms 30. Such actuators may be controlled by electrovalves (not shown) installed in a control unit e.g. arranged inside housing 38. A potentiometer 40, mounted on a respective support structure 42, is preferably associated with each actuator 30 for closed-loop position control in the control unit, allowing a precise positioning of the device.

Additionally, once the device 10 is blocked in place in the cell 2, it is of advantage to implement a force controller that computes and control the necessary forces that each actuator has to exert. The forces can be monitored knowing the position of each actuator 30 (through the potentiometers 40) and a set of pressure sensors (not shown) for each chamber of the actuators that may be installed in the electronics housing 38. Additional force sensors may be further installed for increased accuracy.

As it will be understood from the above, the present handling device 10 has been designed as a capsule that can be deployed inside a cell with a desired tool unit 14 by means of a crane/hoist and ropes (or chain or cable or assembly thereof). A merit of the present invention is thus to propose a kinematic configuration where the tool is not rigidly linked (as with a mast or robot arm) to a support structure outside the cell, but via a flexible link member such as a rope, cable or chain. Furthermore, in conventional remote handling equipments the movement of the tool is produced by the movement of the robot arms directly. With the present handling device 10, only the movement along the vertical axis is driven directly by the external structure (hoist or crane) and, once the device 10 is inside the cell 2, the device is centered and blocked by the forces produced by the expandable arms. The required movements of the tool unit 14 may thus be performed through actuators and degrees of freedom controllable in the tool unit 14 itself. Centering or other lateral displacements of the device 10 and tool unit 14 may be performed by operation of the expandable arms 30.).

As it will appreciated by those skilled in the art, one main benefit from the present device 10 is that the "rigidity" thereof can be changed depending on the requirements of the tasks: when the device 10 is entering the cell, the expandable fixing means are closed (i.e. in rest position) so as to have a compact base module in order to adapt to possible inclinations of the cell. Once the device has reached the desired height in the cell, the mechanism means are activated to center the device, respectively the tool unit, thereby increasing the rigidity and providing the tool with a stable platform to perform the tasks.

The deployment of the handling device in a DSU cell is illustrated in Fig.8, where the handling device is positioned at a desired height in the cell 2, and the device 10 is then blocked by the actuation of the extendable arms (shown in Fig. 4) to allow precise operation of the tool unit 14. The handling device 10 is attached to the crane 9 by means of chains 9a, and the crane 9 is in turn attached at the extremity of metallic ropes 9b of the hoist 9. The chains 9a and ropes 9b thus form the flexible links by means of which the device is attached to the out-of-cell rigid support structure constituted by the gantry crane.

Another benefit of the present device 10 is the reduction of the torques produced by a rigid long arm anchored outside the cell, which further allows reducing the size of the components.

In this variant, the tool support 18 is affixed to the three rods 26 by means of three bolts, which also pass through the base plate 24, thereby keeping the whole structure fixed. The base plate 24 is traversed by all the cables/hoses required for the tool support 18. The tool support 18 isadvantageously configured as an industrial tool changer allowing connection of various types of tool units. Accordingly, tool support 18 comprises in its front face 46 a number of interface connections modules to provide various services such as power, pneumatic air, electronic connections, etc.

Similarly, the tool unit 14 comprises a tool base 48 designed as an interface with the tool support 18 and featuring in its front side 50 interface connections modules for services required for operation of the tool and cooperating with the respective interface connections in the tool support 18.

Cooperating locking means (not shown - conventionally integrated in tool changers) are also provided on both the tool support 18 and tool base 48 for fastening the tool unit 14 to the base module 12. Interface connections and locking means for industrial tool changers are conventional and need not be further described herein.

The tool unit 14 is shown individually in Fig.3. The gripper 52 is attached to the tool base 48 through a kinematic chain having three degrees of freedom to allow easy working in a cell. The selection and distribution of the components have been done taking into account the length and weight of the SNFs and the workspace for the tool. Such tool unit 14 including a tool with its actuators is conventionally referred to as "end effector".

Starting from the tool base 48, a rotational degree of freedom is provided by a motor 49 inside a mechanical unit 51 comprising top 51 a and bottom 51 b plates and a set of rods 51c. The mechanical unit 51 is attached to the tool base 48 by means of bolts, which discharge the motor 49 from supporting the normal forces coming from the load weights. A gearbox unit 53 capable of withstanding normal forces and transmit the rotational movement is attached at the bottom of the mechanical structure 51 and forms the interface with the downstream portion of the tool unit 14

A further degree of freedom is then provided by a linear actuator 56, allowing axial extension.

The third degree of freedom is provided by a motor 57 and a system of a reel and pulley 58 that transform the rotational movement into a linear movement and deploys a cable 59 with the gripper 52 mounted at its extremity. This system avoids possible inertial moments produced by the movement of the SNFs due to their length and weight.

The vision member 20 is attached below the linear actuator 56 and oriented with a viewing direction and outlook to the working area, hence towards the gripper 52. The vision member 20 may of course be attached to a remotely controllable mechanism allowing its selective orientation.

It may be noted that the gripper 52 (that comprises at least three gripping fingers) is preferably designed to be normally closed (i.e. tends to stay or return to a closed, gripping position when no actuating forces are applied by the own weight of the fingers 61, thereby avoiding a spontaneous opening when a SNF is gripped. Such grippers are known in the art and need not be further detailed herein. Conventional gripper designs may be used, they may be electrically or pneumatically actuated, or by any appropriate means.

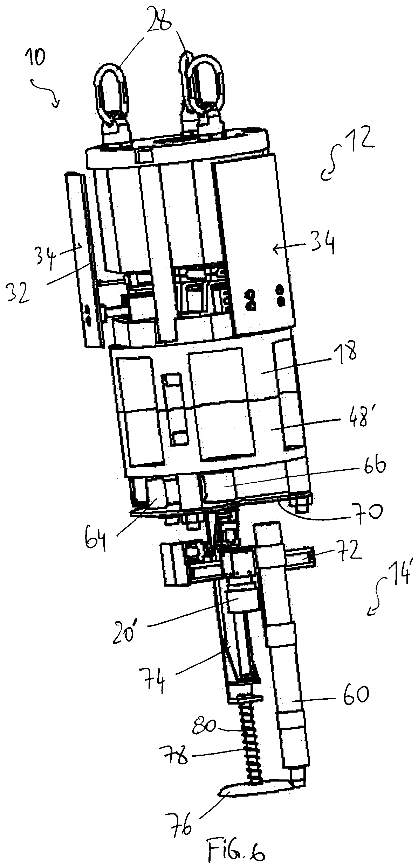

Turning now to Fig.6, a tool unit 14' comprising a cutting tool is shown. Such cutting tool is required in order to be able to open the canisters by cutting their top lid or cut damaged canister parts. The cutting tool may e.g. be a plasma torch 60. The use of a plasma torch requires a good positioning accuracy, whereby three degrees of freedom have been provided to the tool unit 14; but contraty to the gripping tool no loads have to be picked up and therefore the size of the actuators and mechanical components can be reduced.

The interface tool base 48' attached to the tool support 18 of the base module 12 is designed in the same way as the tool base 48 in Fig.2, i.e. with cooperating interface connections and locking means.

A rotational degree of freedom is provided by a motor 64 and a gear box transmission 66, placed on a plate 70 which is attached to the tool base 48' by three rods with three bolts. Two linear actuators 72 and 74 provide the axial and vertical movements, respectively, to the plasma torch 60. A concave plate 76 is attached at the bottom of the vertical actuator with an electrode inside (not shown) in order to touch the head of the canister and to close the electrical circuit for creating the electrical arc required for plasma cutting. A spring 78 around the plate's 76 attachment shaft 80 pushes the plate 76 against the canister head keeping the contact stable.

As it will be clear to those skilled in the art, a variety of tool units can be devised to be connected to the base module 12 of the present handling device, depending on the tasks to be carried out. Tool units for performing the following tasks are of interest:
- Inspection: Since in each cell the canister as well as the degree of degradation can be different, it is necessary to know the particular conditions of each cell in order to plan the necessary tasks. This may be achieved in part through the vision member, but is advantagouesly completed by measuring tools to determine e.g. the radiation level.
- Cleaning: when dismantling a DSU, one has to cope with the presence of water, dust, debris of different sizes and even heavy objects inside the cell, which must be removed before the SNFs retrieval. For this purpose, tool units featuring sucking hoses and various types of grippers may be used.
- Cutting: depending on the conditions of the canisters, it may be required to open the canister by cutting its top lid. Besides, some parts of the canister could be damaged and it might be necessary to cut them as well. Cutting tools allowing cutting in different direction may thus be used.

- New plugs deployment: In the case that a canister is opened and the SNFs retrieval is postponed, a new plug should be deployed inside the cell in order to mitigate radiation dispersion. This can be performed with a gripper unit.
- SNFs retrieval: Once all the preparatory tasks are done, a gripper tool may be used to pick up each SNF and to put it in a retrieval cask.

Finally, a remote control panel 98 is associated with the handling device for control of the later by an operator. The control panel will thus include a video screen for viewing the working area and possibly showing other information as well as the required controls to operate the handling device, i.a. actuating the fixing means, the tool and tool actuators.

For practical industrial use, a cable assembly 71 is preferably employed that carries the control signals, electrical power and other required services (pneumatic air, suction, etc.). This cable assembly 70 is connected to the control panel and the required service sources, and enters the handling unit through orifice 73 in the top plate 22. Nevertheless, in a less compact embodiment batteries may be carried on board of the handling device 10 and at least a part of the operation controlled wireless - although it does not appear appropriate for actual industrial use.

## Claims

1. A remotely controllable handling device (10) for handling material in a cell (2) comprising:
a base module (12) comprising a frame supporting:
- connector means (28) for support of the handling device by a support structure outside the cell,
- extendable fixing means (30) comprising two or more extendable arms (30) able to engage the walls of a cell for blocking said handling device in place,
- a tool support (18);
at least one tool unit (14) mounted to said tool support (18); and
a vision member (20)
**characterized by** force and/or position sensors associated with each of said extendable arms (30).

2. The device according to claim 1, wherein said extendable arms (30) have a length adjustable in a plane transversal to the longitudinal axis of the handling device.

3. The device according to claim 2, comprising three extendable arms (30) arranged with an angular spacing of about 120°.

4. The device according to claim 1, 2 or 3, wherein said extendable arms (30) have the form of linear actuators, preferably provided at their outer ends with blocking pads (32).

5. The device according to claim 4, wherein said pads (32) have a convex arcuate shape with a curvature radius substantially corresponding to the internal radius of the cell.

6. The device according to any one of the preceding claims, wherein said connector means comprise one or more lifting rings (28) secured to said frame of said base module (12).

7. The device according to any one of the preceding claims, wherein said tool support (18) is designed as a tool changer with interface connectors and locking means.

8. The device according to any one of the preceding claims, wherein said tool unit (14, 14') is configured to have at least three degrees of freedom.

9. The device according to any one of the preceding claims, wherein said tool unit comprise a tool selected from the group comprising: a gripper, a soldering iron, a cutting tool, a milling tool and a sucking hose.

10. The device according to any one of the preceding claims, wherein said tool unit (14) comprises a gripper (52) that is normally closed.

11. The device according to any one of the preceding claims, wherein said vision member (20) comprises a video acquisition device and optionally a lighting device, said vision member being preferably mounted to said tool unit (14, 14').

12. The device according to any one of the preceding claims, wherein a flexible link member (9b, 9a), preferably a chain (9a), cable and/or rope (9b), is attached to said connector means (28).

13. The device according to any one of the preceding claims, wherein said device is connected to a remote control unit (98).

14. A handling system comprising a remotely controllable handling device according to any one of the preceding claims and a support structure (8) for carrying and moving said handling device, wherein said handling device is connected to said support structure by means of a flexible link member (9a, 9b), preferably a rope, chain or cable.

15. A storage plant comprising a plurality of substantially cylindrical cells for storing material therein, comprising a handling system according to claim 14.

## Patentansprüche

1. Eine fernsteuerbare Handhabungsvorrichtung (10) zum Handhaben von Material in einer Zelle (2), die Folgendes aufweist:
ein Basismodul (12), das einen Rahmen aufweist, der Folgendes trägt:
- Verbindungsmittel (28) zum Tragen der Handhabungsvorrichtung mittels einer Tragestruktur außerhalb der Zelle,
- ein ausfahrbares Befestigungsmittel (30), das zwei oder mehr ausfahrbare Arme (30) aufweist, die an den Wänden einer Zelle zum Sperren der Handhabungsvorrichtung an Ort und Stelle angreifen können,
- eine Werkzeugunterstützung (18);
mindestens eine Werkzeugeinheit (14), die an der Werkzeugunterstützung (18) befestigt ist; und
ein Sichtelement (20),
**gekennzeichnet durch** Kraft- und/oder Positionssensoren, die mit jedem der ausfahrbaren Arme (30) verbunden sind.

2. Vorrichtung gemäß Anspruch 1, wobei die ausfahrbaren Arme (30) eine Länge haben, die in einer Ebene quer zur Längsachse der Handhabungsvorrichtung verstellbar ist.

3. Vorrichtung gemäß Anspruch 2, welche drei ausfahrbare Arme (30) aufweist, die mit einer Winkelbeabstandung von ca. 120° angeordnet sind.

4. Vorrichtung gemäß Anspruch 1, 2 oder 3, wobei die ausfahrbaren Arme (30) die Form von linearen Betätigungselementen haben, die vorzugsweise an ihren Außenenden mit Blockierpads (32) versehen sind.

5. Vorrichtung gemäß Anspruch 4, wobei die Blockierpads (32) eine konvexe Bogenform mit einem Krümmungsradius aufweisen, der im Wesentlichen dem Innenradius der Zelle entspricht.

6. Vorrichtung gemäß einem der vorhergehenden Ansprüche, wobei die Verbindungsmittel einen oder mehrere Heberinge (28) aufweisen, die an dem Rahmen des Basismoduls (12) angebracht sind.

7. Vorrichtung gemäß einem der vorhergehenden Ansprüche, wobei die Werkzeugunterstützung (18) als ein Werkzeugwechsler mit Schnittstellenanschlüssen und Verriegelungsmitteln ausgebildet ist.

8. Vorrichtung gemäß einem der vorhergehenden Ansprüche, wobei die Werkzeugeinheit (14, 14') so konfiguriert ist, dass sie mindestens drei Freiheitsgrade hat.

9. Vorrichtung gemäß einem der vorhergehenden Ansprüche, wobei die Werkzeugeinheit ein Werkzeug aufweist, das der Gruppe ausgewählt ist, die Folgendes aufweist: einen Greifer, einen Lötkolben, ein Schneidwerkzeug, ein Fräswerkzeug und einen Saugschlauch.

10. Vorrichtung gemäß einem der vorhergehenden Ansprüche, wobei die Werkzeugeinheit (14) einen Greifer (52) aufweist, der normalerweise geschlossen ist.

11. Vorrichtung gemäß einem der vorhergehenden Ansprüche, wobei das Sichtelement (20) eine Videoerfassungsvorrichtung und optional eine Beleuchtungseinrichtung aufweist, wobei das Sichtelement vorzugsweise an der Werkzeugeinheit (14, 14') befestigt ist.

12. Vorrichtung gemäß einem der vorhergehenden Ansprüche, wobei ein flexibles Verbindungselement (9b, 9a), vorzugsweise eine Kette (9a), ein Kabel und/oder ein Seil (9b) an den Verbindungsmitteln (28) befestigt ist.

13. Vorrichtung gemäß einem der vorhergehenden Ansprüche, wobei die Vorrichtung mit einer Fernsteuereinheit (98) verbunden ist.

14. Handhabungssystem, welches eine fernsteuerbare Handhabungsvorrichtung gemäß einem der vorhergehenden Ansprüche und eine Tragestruktur (8) zum Tragen und Bewegen der Handhabungsvorrichtung aufweist, wobei die Handhabungsvorrichtung mit der Tragestruktur über ein flexibles Verbindungselement (9a, 9b), vorzugsweise ein Seil, eine Kette oder ein Kabel verbunden ist.

15. Speicheranlage, die eine Vielzahl von im Wesentlichen zylindrischen Zellen zum Speichern von Material darin aufweist, wobei diese ein Handhabungssystem gemäß Anspruch 14 aufweist.

## Revendications

1. Dispositif (10) de manipulation commandable à distance pour manipuler une matière dans une cellule (2) comprenant :
un module (12) de base comprenant un châssis supportant :
- un moyen connecteur (28) pour le support du dispositif de manipulation par une structure de support à l'extérieur de la cellule,
- des moyens (30) de fixation extensibles comprenant deux bras (30) extensibles ou plus aptes à engager les parois d'une cellule pour bloquer ledit dispositif de manipulation en place,
- un support (18) d'outils ;
au moins une unité (14) d'outil montée sur ledit support (18) d'outils ; et
un élément (20) de vision
**caractérisé par** des capteurs de force et/ou de position associés avec chacun desdits bras (30) extensibles.

2. Dispositif selon la revendication 1, dans lequel lesdits bras (30) extensibles ont une longueur ajustable dans un plan transversal à l'axe longitudinal du dispositif de manipulation.

3. Dispositif selon la revendication 2, comprenant trois bras (30) extensibles agencés avec un espacement angulaire d'environ 120°.

4. Dispositif selon la revendication 1, 2 ou 3, dans lequel lesdits bras (30) extensibles ont la forme d'actionneurs linéaires, préférablement équipés à leurs extrémités extérieures de plaquettes (32) de blocage.

5. Dispositif selon la revendication 4, dans lequel lesdites plaquettes (32) ont une forme en arc de cercle convexe avec un rayon de courbure correspondant sensiblement au rayon interne de la cellule.

6. Dispositif selon l'une quelconque des revendications précédentes, dans lequel ledit moyen connecteur comprend un ou plusieurs anneau(x) (28) de levage fixé(s) audit châssis dudit module (12) de base.

7. Dispositif selon l'une quelconque des revendications précédentes, dans lequel ledit support (18) d'outils est conçu comme un changeur d'outils avec des connecteurs d'interface et des moyens de verrouillage.

8. Dispositif selon l'une quelconque des revendications précédentes, dans lequel ladite unité (14, 14') d'outil est configurée pour avoir au moins trois degrés de liberté.

9. Dispositif selon l'une quelconque des revendications précédentes, dans lequel ladite unité d'outil comprend un outil choisi parmi le groupe comprenant : une pince, un fer à souder, un outil de coupe, un outil de meulage et un tuyau d'aspiration.

10. Dispositif selon l'une quelconque des revendications précédentes, dans lequel ladite unité (14) d'outil comprend une pince (52) qui est normalement fermée.

11. Dispositif selon l'une quelconque des revendications précédentes, dans lequel ledit élément (20) de vision comprend un dispositif d'acquisition vidéo et facultativement un dispositif d'éclairage, ledit élément de vision étant préférablement monté sur ladite unité (14, 14') d'outil.

12. Dispositif selon l'une quelconque des revendications précédentes, dans lequel un élément (9b, 9a) de liaison flexible, préférablement une chaîne (9a), un câble et/ou une corde (9b), est fixé audit moyen connecteur (28).

13. Dispositif selon l'une quelconque des revendications précédentes, dans lequel ledit dispositif est connecté à une unité (98) de commande à distance.

14. Système de manipulation comprenant un dispositif de manipulation commandable à distance selon l'une quelconque des revendications précédentes et une structure support (8) pour supporter et déplacer ledit dispositif de manipulation, dans lequel ledit dispositif de manipulation est connecté à ladite structure support au moyen d'un élément (9a, 9b) de liaison flexible, préférablement une corde, une chaîne ou un câble.

15. Usine de stockage comprenant une pluralité de cellules sensiblement cylindriques pour stocker une matière dans celles-ci, comprenant un système de manipulation selon la revendication 14.
